# EUROPEAN PATENT SPECIFICATION

(11) **EP 3 053 637 B1**
(45) Date of publication and mention of the grant of the patent: **23.10.2019**
(21) Application number: 14847082.6
(22) Date of filing: 11.07.2014
(51) Int. Cl.: B01D 53/86, B01J 23/42, B23K 31/02, B23K 3/08

(54) **SOLDERING APPARATUS WITH A FORMIC ACID DECOMPOSITION APPARATUS AND FORMIC ACID DECOMPOSITION METHOD**
LÖTVORRICHTUNG MIT EINER AMEISENSÄUREZERSETZUNGSVORRICHTUNG UND AMEISENSÄUREZERSETZUNGSVERFAHREN
APPAREIL DE SOUDAGE AVEC UN APPAREIL DE DÉCOMPOSITION D'ACIDE FORMIQUE ET PROCÉDÉ DE DÉCOMPOSITION D'ACIDE FORMIQUE

(30) Priority: 30.09.2013 JP 2013204287
(43) Date of publication of application: 10.08.2016
(73) Proprietor: Origin Company, Limited, Saitama-shi Saitama (JP)
(72) Inventor: OZAWA, Naoto, Tokyo 171-8555 (JP)
(74) Representative: Wallin, Nicholas James
(86) International application number: PCT/JP2014/068557
(87) International publication number: WO 2015/045566

(56) References cited:
- EP-A1- 2 471 622
- WO-A1-2007/116874
- WO-A1-2011/024813
- CA-A- 652 216
- CA-A- 753 669
- JP-A- S55 137 030
- JP-A- S60 147 226
- JP-A- 2006 281 166
- JP-A- 2009 197 735
- JP-A- 2011 067 564
- US-A- 3 432 544

## Description

### TECHNICAL FIELD

The present invention relates to an apparatus comprising a soldering apparatus and a formic acid decomposition apparatus and a formic acid decomposition method.

### BACKGROUND ART

When a solder bump is formed on a semiconductor chip, a solder is deposited on a pad and then a shape of the solder bump is changed from a mush room shape to a hemisphere shape, followed by reflowing to join by soldering. According to a conventional soldering method, in order to form a uniform solder bump, a surface oxide film of a solder is removed with a flux to cleanse the surface of the solder bump.

However, according to a soldering process that uses a flux, small cavities (voids) may be formed in the solder bump due to decomposition of the flux. These cavities not only deteriorate electrical and mechanical properties of a formed solder joint but also destroy flatness of a semiconductor with the solder bump and may generate a harmful effect on the following semiconductor joining process. A volatile material of the decomposed flux may contaminate the inside of a reflow processor (soldering apparatus) and as a result a maintenance cost may increase. In addition, a flux residue remains frequently on a semiconductor substrate to cause metal corrosion, and degradation of performance of an assembly. Further, according to a method in which the flux residue is cleansed and removed after reflow step, a time required for soldering increases because of addition of after-cleansing as a new processing step.

Therefore, as a soldering method without use of a flux, there is known a method of reducing with formic acid the solder and the joined members such as a substrate and electrode (see Patent Documents 1 to 3 and others). According to such a method of reduction, when a temperature of a substrate on which solder members are mounted reaches a predetermined temperature, the solder members are exposed to a reducing gas including formic acid to perform a reduction treatment in which a surface oxide film is removed and are then molten to be processed.

However, formic acid sometimes corrodes a chamber material, a corrosion product may become a contamination source as a metallic foreign matter in the chamber, and fly and adhere to the substrate, electronic components mounted on the substrate and the like. Therefore, it is necessary to remove the formic acid from the inside of the chamber after completion of the reduction process. Further, it is desirable to safely dispose of the formic acid recovered from the chamber because of irritating property thereof.

In a soldering apparatus described in Patent Document 1, formic acid is vaporized by heating at a temperature between 150°C and 200°C in a heating chamber and decomposed as shown below to generate a hydrogen gas and a carbon monoxide gas, the generated gases are supplied to the soldering apparatus to reduce an oxide film. However, the apparatus is an apparatus that uses a reducing gas (hydrogen and carbon monoxide) generated by heating and decomposing formic acid and is not an apparatus that removes the oxide film with formic acid.

HCOOH → H₂O + CO

HCOOH → H₂ + CO₂

A soldering apparatus disclosed in Patent Document 2 includes a processing chamber and a formic acid introduction unit that introduces an atmosphere gas containing formic acid into the processing chamber, and further includes a formic acid decomposition means (heater) for heating and decomposing formic acid that is disposed between a reflow processing part of the processing chamber and an inner wall of the processing chamber. After completion of reflow process, the heater installed so as to cover an inner wall surface heats a formic acid atmosphere gas adhering to a shield material and a chamber material at 200°C or more to be decomposed.

A soldering apparatus disclosed in Patent Document 3 includes an exhaust port at which an exhaust pump and a formic acid recovering unit are provided for dissolving the exhausted formic acid into water or alcohol to recover it. Further, at the exhaust port of the soldering apparatus, a formic acid decomposition unit is attached, and the formic acid gas exhausted from a chamber is decomposed by heating at a temperature between 200°C and 300°C by the heater.

Further, Patent Document 4 discloses a soldering apparatus that includes a formic acid feed unit for feeding formic acid to a heating chamber and an exhaust unit for exhausting formic acid outside of the heating chamber. A formic acid decomposition unit or a formic acid recovery unit is connected to an exhaust port of the exhaust unit, and the formic acid decomposition unit is a heating part for heating an exhaust gas exhausted from the exhaust unit at 400°C or more.

Further, Patent Document 5 discloses a soldering apparatus including a formic acid feed means for feeding formic acid into a heating and melting region and an exhaust unit for exhausting a gas in the heating and melting region of formic acid. The formic acid fed to the heating and melting region is introduced into a formic acid decomposition unit or a formic acid recovery unit by the exhaust unit. Thus, an environment is prevented from being destroyed due to formic acid. Since, in the formic acid decomposition unit, a heater heats an inside of a through-hole at 200°C to 300°C, formic acid is decomposed into water and carbon during travel through the through-hole and then exhausted.

### PRIOR ART DOCUMENTS

### PATENT DOCUMENTS

Patent Document 1: JP 2011-060856 A
Patent Document 2: JP 2007-125578 A
Patent Document 3: JP 2001-244618 A
Patent Document 4: JP 2002-361472 A
Patent Document 5: JP 2002-210555 A

Other prior art includes CA 753669A, and CA 652216A, which both relate to methods of removing formic acid from mixtures by making use of a catalyst. WO2011/024813 A1 discloses a soldering apparatus in which a carboxylic acid, such as formic acid, is supplied.

### SUMMARY OF THE INVENTION

### PROBLEM TO BE SOLVED BY THE INVENTION

However, there is a problem in the method described in Patent Document 1 that a reduction process cannot be applied to a lead-free solder having a melting point equal to or lower than a reduction start temperature of hydrogen (about 270°C) before melting of the solder because the method reduces an oxide film with hydrogen and carbon monoxide.

Regarding this point, the methods described in Patent Documents 2 and 3 have an advantage that they can be widely applied also to solders having a relatively low melting point because formic acid (reduction start temperature of about 150°C) is used. However, according to the method described in Patent Document 2, it is necessary to remove water remaining in the soldering apparatus after decomposition of formic acid. According to the method described in Patent Document 3, it is necessary to process the recovered formic acid with alkali. Both methods are therefore cumbersome in the step of processing formic acid.

The present invention was invented in view of the above-described circumstances and intends to provide an apparatus comprising a soldering apparatus and a formic acid decomposition apparatus and a decomposition method of formic acid and a soldering apparatus, capable of safely and rapidly processing formic acid.

### MEANS FOR SOLVING THE PROBLEM

As a result of study to solve the above-described problems, the inventor has found that when a gas containing formic acid is allowed to react with oxygen or air in the presence of a formic acid decomposition catalyst, formic acid can be safely and rapidly detoxified, and the present invention was achieved.

Various aspects and features of the present invention will be apparent from the appended claims.

### EFFECT OF THE INVENTION

The apparatus and formic acid decomposition method of the present invention can rapidly decompose formic acid into water and carbon dioxide. Therefore, when the formic acid decomposition apparatus is attached to the soldering apparatus using formic acid for reduction process, formic acid remaining in the soldering apparatus (chamber) after the reduction process can be safely processed. Further, by heating the catalyst in the formic acid decomposition apparatus, formic acid can be surely decomposed, and by evaporating water generated as a by-product, water droplets can be prevented from remaining in the apparatus.

Undecomposed formic acid can be prevented from being emitted into atmosphere because the formic acid decomposition apparatus of the present invention determines the degree of activity of the catalyst on a real time basis. A lifetime of the catalyst can be estimated when thermocouples are disposed at two or more positions and the difference of the degree of activity of the catalyst between an upstream part and a downstream part is determined. Further, production efficiency of products accompanying the soldering process can be improved because a time for replacement of the catalyst can be estimated.

### BRIEF DESCRIPTION OF THE DRAWINGS

FIG. 1 is a schematic diagram of a formic acid decomposition apparatus and a soldering apparatus.
FIG. 2 is a diagram, illustrating catalyst activity during a decomposition reaction of formic acid.
FIG. 3 is a schematic block diagram of a formic acid decomposition part.
FIG. 4 is a conceptual diagram, illustrating a change of a temperature during continuous operation of the formic acid decomposition apparatus (during catalyst activation) and a determination method of the catalyst activity.
FIG. 5 is a diagram, showing a result of Example 1 in which a change of a temperature during continuous operation of the formic acid decomposition apparatus is measured.
FIG. 6 is a graph, summarizing the change of the temperature measured in Example 1.

### DETAILED DESCRIPTION OF EMBODIMENTS

An apparatus and a formic acid decomposition method according to the present invention are now described in detail as follows.

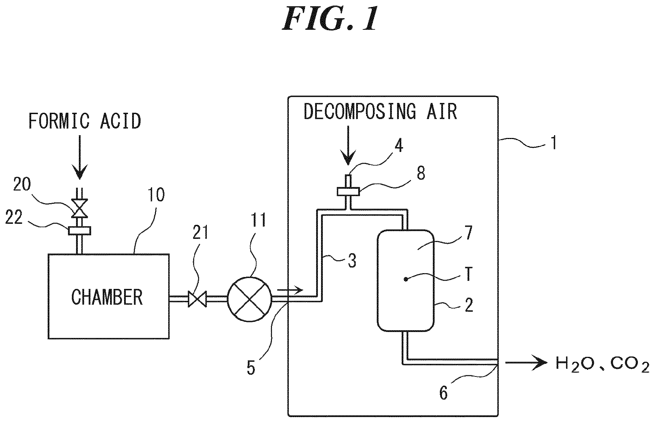

FIG. 1 is a schematic diagram, showing an example of a formic acid decomposition apparatus of the present invention, in which the formic acid decomposition apparatus is applied to a soldering apparatus. In FIG. 1, reference numeral 1 denotes a formic acid decomposition apparatus, reference numeral 2 denotes a formic acid decomposition part that is filled with a formic acid decomposition catalyst, reference numeral 3 denotes a gas introduction pipe for introducing gas containing formic acid into the formic acid decomposition part, reference numeral 4 denotes a gas introduction unit for introducing oxygen or gas containing oxygen for decomposing formic acid into the formic acid decomposition part, reference numeral 5 denotes an introduction inlet of the gas containing formic acid, and reference numeral 6 denotes an exhaust outlet of a formic acid decomposition material. The gas introduction pipe 3 preferably has a flowmeter 8 and a flow regulation valve.

According to the formic acid decomposition apparatus 1 shown in FIG. 1, in the formic acid decomposition part 2, there is formed a catalyst layer 7 that is filled with the formic acid decomposition catalyst, and there is provided, in the catalyst layer 7, a thermocouple T for measuring a temperature. The gas containing formic acid introduced from the gas introduction pipe 3 is introduced into the formic acid decomposition part 2 together with oxygen or the gas containing oxygen introduced from the gas introduction unit 4, then reacts when coming into contact with the catalyst, and is decomposed into water and carbon dioxide. A reaction formula is shown below and the reaction is an exothermic reaction.

HCOOH + 1/2O₂ → H₂O + CO₂

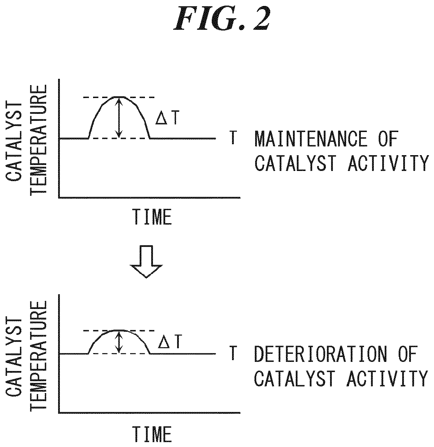

Because of the exothermic reaction, as shown in FIG. 2, when a reaction condition other than the catalyst is set equal, in the case where the activity of the catalyst is high, a reaction rate becomes larger and a heat of reaction generated per unit time increases to raise the catalyst temperature, while in the case where the activity of the catalyst is low, a degree of increase of the catalyst temperature becomes smaller because the heat of reaction generated per unit time is small.

As the catalyst filled in the formic acid decomposition part 2, a catalyst having a platinum group metal carried on a carrier (excluding a carbon material) is used.

As the platinum group catalyst, catalysts in which a platinum group metal such as palladium, platinum, ruthenium, rhodium, or iridium is carried by a carrier such as silica, alumina, silica/alumina, or zeolite (excluding carbon material) can be also used. In particular, a catalyst carrying 1.8 g/L to 3 g/L of the platinum group catalyst with respect to those carriers is preferable.

A catalyst layer can be formed by filling a catalyst having an arbitrary form of powder, particle, or granule, or by filling a catalyst in which a platinum group catalyst is carried on a molded body obtained by molding the above-described carrier into an arbitrary shape such as a honeycomb shape and a corrugate shape. The molded body has, in addition to excellent decomposition efficiency and large reaction rate, advantages such as excellent durability and easy replacement of the catalyst. The molded body is preferably formed into a porous body having a large specific surface area, and, in order to rapidly and surely decompose formic acid, cell density of the molded body is preferably 200 cells/in² or more.

Although a temperature of the catalyst before formic acid begins a decomposition reaction is not particularly limited, the higher the temperature is, the faster the decomposition rate becomes. However, a high temperature necessitates a large apparatus and when the temperature exceeds 500°C the catalyst may be deteriorated. Therefore, the temperature is set preferably in a range between 20°C and 200°C, more preferably between 50°C and 100°C, and should be controlled at a constant temperature.

Further, a reaction between formic acid and oxygen or the gas containing oxygen is sufficiently performed under normal pressure, but may be performed under increased pressure or reduced pressure. A molar ratio of formic acid and oxygen (oxygen/formic acid) is 1.5 or more, appropriately selected by considering the types of the catalyst to be used, a reaction condition, cost, and the like, and does not have an upper limit. It should be noted that the reaction between formic acid and oxygen or the gas containing oxygen may be performed according to any one of a batch method, a semi-batch method or a continuous method.

The formic acid decomposition apparatus of the present invention is used as a formic acid processing apparatus in the soldering apparatus (hereinafter, referred to as a chamber) 10 in which formic acid is used as a reducing agent. In this case, as shown in FIG. 1, an exhaust gas (a gas mixture containing HCOOH, CO₂ and H₂O) exhausted after a surface oxide film of the solder or joined members are reduced with formic acid in the chamber 10 is introduced into the gas introduction pipe 3 from the gas introduction inlet 5 of the formic acid decomposition apparatus; then introduced into the formic acid decomposition part 2 together with oxygen or the gas containing oxygen; then allowed to react while passing through the formic acid decomposition part 2; and therefore may be merely exhausted from the exhaust outlet 6. The exhaust gas exhausted from the chamber 10 is preferably an inert gas containing formic acid, carbon dioxide and water. The inert gas includes nitrogen gas, argon gas, helium gas and the like, but nitrogen gas is preferable in view of availability.

A temperature of the exhaust gas is different depending on a reduction process condition such as the type of the solder used in the reduction process and is generally not lower than 150°C and not higher than a solder melting point. In the present invention, it is better to introduce the exhaust gas into the formic acid decomposition part 2 without particularly heating. The solder may be any one of a lead solder and a lead-free solder.

The gas introduction unit 4 including a gas introduction inlet of oxygen or the gas containing oxygen (air is preferable from the viewpoint of cost and supply), a flow regulation valve, a flowmeter and the like is preferably used. It is better to control a molar ratio of oxygen, by using the flow regulation valve and the flowmeter, depending on an amount of exhaust gas introduced into the formic acid decomposition apparatus 1 via the vacuum pump 11 from the chamber 10.

According to the formic acid decomposition method of the present invention, formic acid can be decomposed into water and carbon dioxide by allowing a gas containing formic acid to react with oxygen or the gas containing oxygen in the presence of the formic acid decomposition catalyst. The gas containing formic acid and oxygen or the gas containing oxygen for decomposing formic acid (air or the like) may be separately introduced into the formic acid decomposition part, but, are preferably introduced as a gas mixture after mixing both into the formic acid decomposition part because uniformity of the reaction can be improved and flow rate can be regulated easily.

Further, an unheated catalyst can promote the reaction but a heated catalyst is preferably used. By heating the catalyst, formic acid can be surely decomposed into carbon dioxide and water, while by-produced water can be vaporized, gasified and surely exhausted outside of the apparatus via the exhaust outlet 6.

Introduction amounts of the gas containing formic acid and oxygen or the gas containing oxygen may be appropriately selected by considering a concentration of formic acid used in the decomposition reaction, the type of the catalyst used, a reaction temperature or the like, but not particularly limited to them. In order to maintain the decomposition rate in a favorable state, it is desirable to vary an amount of the catalyst in accordance with the introduction amounts of these gases. Further, the amount of formic acid in the gas containing formic acid is not particularly limited.

The apparatus of the present invention is used in connection with the soldering apparatus that uses formic acid as a reducing agent, and a formic acid decomposition process in this case may be any one of a batch method, a semi-batch method and a continuous method. However, the catalyst activity may degrade with time.

Therefore, according to the formic acid decomposition apparatus of the present invention, in the formic acid decomposition apparatus including the formic acid decomposition part filled with the formic acid decomposition catalyst, the gas introduction pipe for introducing the gas containing formic acid into the formic acid decomposition part, and the gas introduction unit for introducing oxygen or the gas containing oxygen into the formic acid decomposition part, the exhaust gas containing formic acid and oxygen or the gas containing oxygen are introduced into the formic acid decomposition part, a change of a catalyst temperature due to heat generation during the decomposition reaction of formic acid is measured with the thermocouple installed inside of the catalyst layer, and the degree of activity of the catalyst is determined from a magnitude of an amount of change of an increased temperature. That is, as shown in FIG. 2, the catalyst temperature is measured continuously from a start of introduction to an end of introduction of the gas containing formic acid, and the amount of change of the catalyst temperature (ΔT) increased with heat generation during the decomposition reaction of formic acid is obtained, thereby to determine the degree of activity of the catalyst.

Accordingly, when the thermocouple is disposed at least at one position in the upstream part of the catalyst layer and the amount of change of the catalyst temperature (ΔT) is obtained, the degree of activity of the catalyst can be determined. Further, when the thermocouple is disposed at each of at least two positions in the upstream part and downstream part of the catalyst layer and the amounts of change of the catalyst temperatures (ΔT) measured by the respective thermocouples are compared, the degree of activity of the catalyst in the entire catalyst layer can be determined.

The amount of change of the catalyst temperature (ΔT) tends to be larger as the content of formic acid in the introduced gas increases and it tends to be larger as the catalyst activity is higher because the amount of change of the catalyst temperature (ΔT) correlates with the amount of the introduced formic acid and the catalyst activity. Even when the content of formic acid in the gas is constant, the amount of change of the catalyst temperature (ΔT) is influenced by a flow rate of the gas. Therefore, in order to make determination accuracy of the degree of activity of the catalyst higher, a change of the flow rate of the gas passing through the catalyst layer (total amount of the gas containing formic acid and oxygen or the gas containing oxygen) is regulated to be within 0.2 L/min.

Then, by setting an amount of change of the catalyst temperature (ΔT) to be a criterion of determination, when the amount of change of the catalyst temperature (ΔT) is larger than the setting value, the catalyst activity is determined to be maintained, and when the amount of change of the catalyst temperature (ΔT) is smaller than the setting value, the catalyst activity is determined to be deteriorated. By setting such that an alarm of the apparatus is activated when the catalyst activity is determined to be deteriorated, it can be known that the catalyst should be replaced without always observing the amount of change of the catalyst temperature (ΔT).

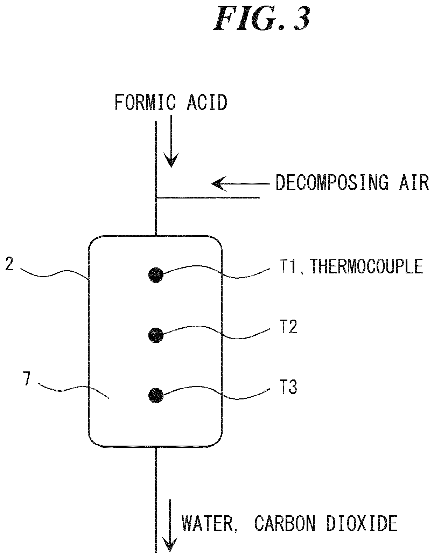

It is preferable to apply a catalyst activity diagnostic method of the present invention to the formic acid decomposition apparatus of the present invention. FIG. 3 is a schematic block diagram of a periphery of the formic acid decomposition part 2 of the formic acid decomposition apparatus suitable for applying the catalyst activity diagnostic method of the present invention. In FIG. 3, T1, T2 and T3 denote thermocouples that are inserted into the catalyst layer 7 in the formic acid decomposition part 2. T1 is disposed in the upstream part of the catalyst layer 7, T2 is disposed in the middle part of the catalyst layer 7, and T3 is disposed in the downstream part of the catalyst layer 7.

In the case where the thermocouple T is located at least at two positions on the upstream part and the downstream part of the catalyst layer, the gas containing formic acid and oxygen or the gas containing oxygen, when flowing in the formic acid decomposition part 2, first, come into contact with the catalyst in the upstream part, and, thereafter, come into contact with the catalyst in the downstream part. Therefore, the temperature of the catalyst on the upstream side rises due to a heat of reaction between formic acid and oxygen. Then, as the gas flows from the catalyst disposed in the middle part to the catalyst disposed in the downstream part, an amount of formic acid decreases. As a result, the heat of reaction becomes smaller, and a rise width of the catalyst temperature decreases. Thus, it can be readily determined such that, for example, even when the catalyst activity on the upstream side deteriorates, the catalyst activity on the downstream side does not deteriorate because the catalyst activity of the catalyst on the upstream side and the catalyst activity of the catalyst on the downstream side can be compared. The amount of change of the catalyst temperature (ΔT1) measured by the thermocouple on the upstream side and the amount of change of the catalyst temperature (ΔT2) measured by the thermocouple on the downstream side are compared. When either one of the amounts of change is larger than the setting value, it can be determined that the activity of the catalyst is maintained. The thermocouple T2 is not essential. However, by providing it, the number of measurement points of the catalyst activity increases, and the catalyst activity can be more precisely determined. Three or more thermocouples may be disposed as required.

After the temperature values measured by the thermocouple are sent to a data processor as input values, the amount of change of the catalyst temperature (ΔT) at each of measurement points is calculated in the data processor. When the amount of change of the catalyst temperature (ΔT) is not smaller than the setting value, the catalyst activity is determined to be maintained, and when the amount of change of the catalyst temperature (ΔT) is smaller than the setting value, the catalyst activity is determined to be deteriorated (alarm of the apparatus). The setting value can be appropriately set by considering the concentration of formic acid in the gas to be processed, the flow rate of the gas, cost, the flow rate of oxygen, a heating temperature of the catalyst layer, a structure of the catalyst layer, the type of the catalyst and the like.

Although an example of a diagnostic method for determining the amount of change of the catalyst temperature by the thermocouple has been described, it is also possible to determine the degree of activity of the catalyst by using the thermocouple to measure an amount of reaction heat. Further, the gas containing formic acid may contain any gas, such as aldehyde, other than inert gas such as nitrogen gas.

### EXAMPLES

Hereinafter, the present invention will be described in more detail with reference to examples. However, the present invention is not limited only to the following examples.

### (Test Method)

A test was performed using the apparatus as shown in FIG. 1. In the apparatus, the chamber 10 has a capacity of 20 L and the formic acid decomposition part 2 was filled with a catalyst of 1 L. In the formic acid decomposition part 2, as shown in FIG. 3, thermocouples T1, T2 and T3 were disposed at three positions in an upstream part, a middle part and a downstream part of the catalyst layer, respectively. These thermocouples were positioned at the center part of the catalyst layer. As a catalyst, a Pt/alumina catalyst in which Pt is carried on particulate alumina at 1.8 g/L was used. In order to determine the catalyst activity, the test was performed partially using a catalyst of which activity was degraded.

A test method is as follows. With a valve 20 and a valve 21 closed and with the vacuum pump 11 operated, by flowing decomposing air via the introduction unit 4 and by heating the catalyst in the formic acid decomposition part 2 by a heater (not shown) to 100°C, a test preparation comes to completion. Then, the valve 20 is opened, via a flowmeter 22, the gas containing formic acid is introduced into the chamber 10 at a flow speed of 20 L/min. When the gas containing formic acid is introduced into the chamber 10, the valve 20 is closed, the valve 21 is opened, the gas containing formic acid in the chamber 10 is exhausted by the vacuum pump 11, the gas containing formic acid and decomposing air are passed through the formic acid decomposition part 2 to decompose formic acid, and, the temperatures at the upstream part, the middle part and the downstream part of the catalyst layer during this period are measured with thermocouples T1, T2 and T3, respectively. When the gas in the chamber 10 is entirely exhausted, the valve 21 is closed, and one cycle of test comes to completion. By repeating the cycle, the temperatures are measured with the thermocouples T1, T2 and T3.

As the gas containing formic acid, a mixed gas obtained by mixing formic acid gas and nitrogen gas and by controlling the concentration of formic acid in the mixed gas to 3% was used. Air was used as the decomposing air.

The test was performed by setting an evacuation capacity of the vacuum pump 11 at 120 L/min and a flow rate of the decomposing air at 30 L/min. Therefore, an amount of formic acid passing through the formic acid decomposition part 2 was 3.6 L/min, an amount of oxygen in the decomposing air was 6.3 L/min (as an oxygen concentration in air is 21%), and a molar ratio of oxygen and formic acid was oxygen/formic acid = 1.75.

### (Method for determining Catalyst Activity)

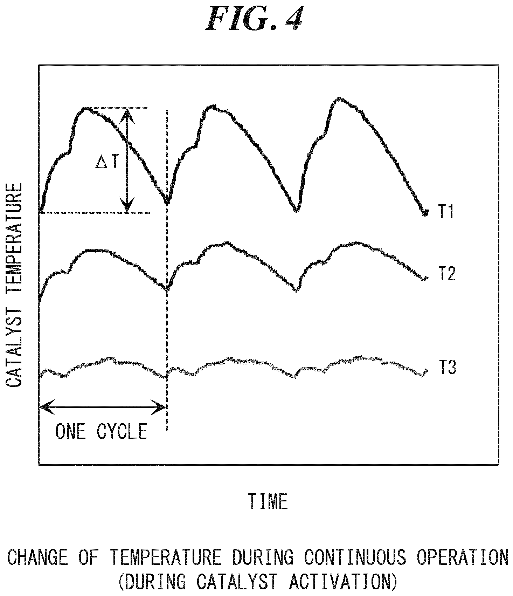

As shown in FIG. 4, the catalyst activity is determined from a situation of the catalyst temperatures measured by the thermocouples T1, T2 and T3. FIG. 4 is a conceptual diagram showing a change of the catalyst temperature, and a large part of formic acid introduced in the formic acid decomposition part 2 is decomposed in the upstream part of the catalyst layer, the catalyst temperature measured by the thermocouple T1 on the upstream part largely rises when formic acid gas is introduced, and is cooled by the decomposing air when the passage of formic acid gas ends. Since a large part of formic acid is decomposed in the upstream part of the catalyst layer and an amount of formic acid reaching the middle part of the catalyst layer is less than that in the upstream part, a degree of increase of the catalyst temperature measured by the thermocouple T2 is small. Then, since formic acid hardly reaches the downstream part of the catalyst layer, it is found that the temperature of the catalyst measured by the thermocouple T3 does hardly change. Further, when an amount of change of the catalyst temperature (ΔT in FIG. 4) falls below a preset value, it is determined that the catalyst activity deteriorated.

### (Example 1)

As a catalyst, a Pt/alumina catalyst in which Pt is carried at 1.8 g/L on particulate alumina was used. A catalyst layer was prepared by filling 1 L of newly prepared catalyst in the formic acid decomposition part 2 and a test was performed according to the above-described test method (refers to as test (a)).

Next, 330 ml of a catalyst that is partially deactivated was prepared and filled in a portion of upper one third of the formic acid decomposition part 2 (in lower two thirds, the newly prepared catalyst that was used in the test (a) was filled), the test was performed according to the above-described test method (refers to as test (b)).

Further, 330 ml of a catalyst that is completely deactivated was prepared and filled in upper one third of the formic acid decomposition part 2 (in the lower two thirds, the newly prepared catalyst that was used in the test (a) was filled), and the test was performed according to the above-described test method (refers to as test (c)).

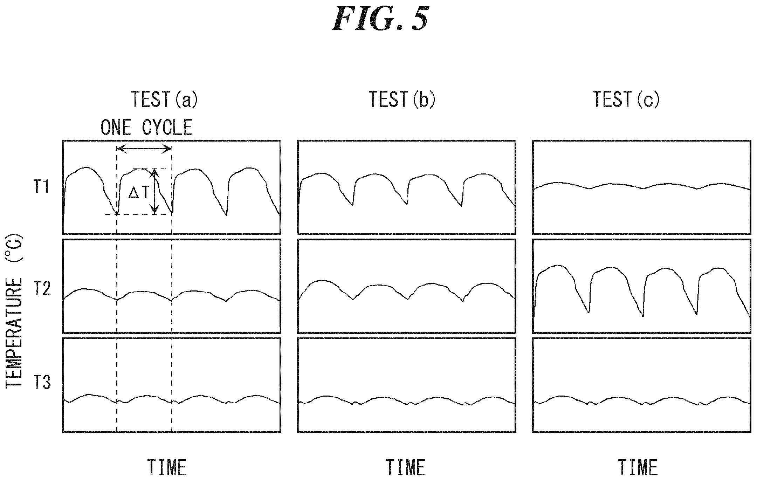

Changes of temperature of the upstream part, the middle part and the downstream part of the catalyst layer measured by the thermocouples T1, T2 and T3 in the test (a), test (b) and test (c) are shown in FIG. 5. In FIG. 5, a test result from first to fourth cycle is illustrated.

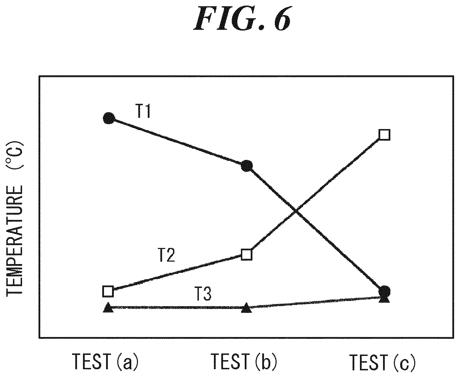

Further, values of the amounts of change of the catalyst temperatures (ΔT) obtained from the measurement results of the temperatures shown in FIG. 5 are shown together in FIG. 6. In FIG. 6, a graph denoted as T1 shows an amount of change of the catalyst temperature in each of the tests (a), (b) and (c) of the upstream part of the catalyst layer. In the same manner, a graph denoted as T2 and a graph denoted as T3 each shows an amount of change of the catalyst temperature in each of the tests (a), (b) and (c) of the middle part and the downstream part of the catalyst layer, respectively.

From FIG. 5 or FIG. 6, it is found that in the case of the test (a) where the new catalyst having sufficient catalyst activity was used, almost all of formic acid introduced into the formic acid decomposition part 2 was decomposed in the upstream part of the catalyst layer and did not reach the middle part and the succeeding part of the catalyst layer. In the case of the test (b) where the partially deactivated catalyst was used in the upstream part of the catalyst layer, it is found that formic acid could not be completely decomposed on the upstream part of the catalyst layer and part of formic acid reached the middle part. And, in the case of the test (c) where a completely deactivated catalyst was used in the upstream part of the catalyst layer, it is found that the decomposition of formic acid hardly occurred in the upstream part of the catalyst layer and formic acid was decomposed in the middle part of the catalyst layer.

### INDUSTRIAL APPLICABILITY

A formic acid decomposition apparatus and a formic acid decomposition method according to the present invention can be suitably utilized as an apparatus and a method for processing a reducing gas used in a soldering step of a semiconductor device.

### EXPLANATION OF REFERENCE NUMERALS

- 1: formic acid decomposition apparatus
- 2: formic acid decomposition part
- 3: gas introduction pipe
- 4: gas introduction unit
- 5: gas introduction inlet
- 6: exhaust outlet
- 7: catalyst layer
- 8: flowmeter
- 10: chamber
- 11: vacuum pump
- 20: valve
- 21: valve
- 22: flowmeter

## Claims

1. An apparatus comprising:
a soldering apparatus (10) configured to reduce a surface oxide film with formic acid,
a formic acid decomposition apparatus (1) configured to decompose formic acid into water and carbon dioxide, the formic acid decomposition apparatus being connected with the soldering apparatus, the formic acid being contained in an exhaust gas exhausted from the soldering apparatus, the formic acid decomposition apparatus comprising:
a formic acid decomposition part (2) in which a catalyst having a platinum group metal carried on a carrier (excluding a carbon material) is filled;
a gas introduction pipe (3) configured to introduce the exhaust gas containing formic acid from the soldering apparatus into the formic acid decomposition part;
a gas introduction unit (4) configured to introduce an oxygen or a gas containing oxygen into the formic acid decomposition part; and
a vacuum pump (11) configured to introduce the exhaust gas into the formic acid decomposition part, wherein the vacuum pump (11) is configured to control a change of a flow rate of a gas passing through a catalyst layer (a total amount of the gas containing formic acid and the oxygen or the gas containing oxygen) to be within 0.2 L/min when an amount of change of a catalyst temperature is measured,
**characterized in that** the formic acid decomposition part has a thermocouple configured to measure a catalyst temperature at least at one position on an upstream part,
the formic acid decomposition apparatus further comprising a data processor configured to input the temperature measured by the thermocouple;
wherein the data processor is configured to calculate an amount of change of the catalyst temperature (ΔT) from the temperature measured by the thermocouple, the amount of change of the catalyst temperature (ΔT) being increased by heat generation during a decomposition reaction of formic acid when the exhaust gas containing formic acid and the oxygen or the gas containing oxygen are introduced into the formic acid decomposition part to determine activity of the catalyst,
wherein the data processor is configured to determine that the activity of the catalyst is maintained when the amount of change of the catalyst temperature (ΔT) measured by the thermocouple is not smaller than a setting value, and that the activity of the catalyst is deteriorated when the amount of change of the catalyst temperature (ΔT) measured by the thermocouple is smaller than the setting value.

2. The apparatus according to claim 1, wherein the formic acid decomposition part has a thermocouple configured to measure a catalyst temperature at least at two positions on an upstream part and a downstream part,
wherein the data processor is configured to calculate each amount of change of the catalyst temperature (ΔT1,ΔT2) from the temperature measured by the thermocouple, each of the amount of change of the catalyst temperature (ΔT1, ΔT2) being increased by heat generation during a decomposition reaction of formic acid when the exhaust gas containing formic acid and the oxygen or the gas containing oxygen are introduced into the formic acid gas decomposition part to determine activity of the catalyst,
wherein the data processor is configured to compare the amount of change of the catalyst temperature (ΔT1) measured by the thermocouple on the upstream part and the amount of change of the catalyst temperature (ΔT2) measured by the thermocouple on the downstream part, and the data processor determines that the activity of the catalyst is deteriorated when ΔT1 is smaller than a setting value.

3. The apparatus according to claim 1, wherein the formic acid decomposition part has a heater for heating the catalyst.

4. The apparatus according to claim 1, wherein when the amount of change of the catalyst temperature (ΔT) is smaller than the setting value, an apparatus alarm is operated.

5. The apparatus according to claim 2, wherein when the amount of change of the catalyst temperature (ΔT1) is smaller than the setting value, an alarm of the apparatus is activated.

6. A formic acid decomposition method comprising the steps of:
mixing an exhaust gas containing formic acid exhausted from a soldering apparatus in which a surface oxide film is reduced with formic acid, and an oxygen or a gas containing oxygen such that a molar ratio of formic acid and oxygen (oxygen/formic acid) is 1.5 or more, and
allowing the mixed gas to be reacted by passing through a decomposition part in which a catalyst having a platinum group metal carried on a carrier (excluding a carbon material) is filled to decompose formic acid into water and carbon dioxide, **characterized in that** the method further comprising the steps of:
introducing the mixed gas into the decomposition part under condition where a change of a flow rate of the mixed gas is within 0.2L/min;
measuring an amount of change of the catalyst temperature (ΔT) at least at an upstream part in the decomposition part, the catalyst temperature (ΔT) being increased by heat generation during decomposition reaction of formic acid in the mixed gas; and
determining that the activity of the catalyst is maintained when the amount of change of the catalyst temperature (ΔT) is not smaller than a setting value, and determining that the activity of the catalyst is deteriorated when the amount of change of the catalyst temperature (ΔT) is smaller than the setting value.

7. The formic acid decomposition method according to claim 6, wherein a temperature of the exhaust gas is not lower than 150°C and not higher than a solder melting point of a solder which is used in the soldering apparatus.

8. The formic acid decomposition method according to claim 6 or 7, wherein a temperature of the catalyst before formic acid in the mixed gas begins a decomposition reaction is between 50°C and 100°C.

9. The formic acid decomposition method according to any one of claims 6 to 8, wherein the exhaust gas containing formic acid is an inert gas containing formic acid, carbon dioxide and water.

10. The formic acid decomposition method according to any one of claims 6 to 9, wherein the formic acid decomposition method uses the apparatus according to claim 1.

## Patentansprüche

1. Vorrichtung, welche aufweist:
eine Lötvorrichtung (10) die ausgestaltet ist, um einen Oberflächenoxidfilm mit einer Ameisensäure zu reduzieren,
eine Ameisensäure-Zersetzungsvorrichtung (1), die ausgestaltet ist, um die Ameisensäure in Wasser und Kohlendioxid zu zersetzen, wobei die Ameisensäure-Zersetzungsvorrichtung mit der Lötvorrichtung verbunden ist, wobei die Ameisensäure in einem Abgas enthalten ist, das aus der Lötvorrichtung abgegeben wird, und wobei die Ameisensäure-Zersetzungsvorrichtung aufweist:
einen Ameisensäure-Zersetzungsteil (2), in den ein Katalysator mit einem auf einem Träger getragenen Platingruppenmetall (ausgenommen ein Kohlenstoffmaterial) gefüllt ist,
ein Gaseinleitungsrohr (3), das ausgestaltet ist, um das Abgas, das die Ameisensäure enthält, aus der Lötvorrichtung in den Ameisensäure-Zersetzungsteil einzuleiten, eine Gaseinleitungseinheit (4), die ausgestaltet ist, um einen Sauerstoff oder ein den Sauerstoff enthaltendes Gas in den Ameisensäure-Zersetzungsteil einzuleiten, und
eine Vakuumpumpe (11), die ausgestaltet ist, um das Abgas in den Ameisensäure-Zersetzungsteil einzuführen, wobei die Vakuumpumpe (11) ausgestaltet ist, um eine Änderung einer Strömungsrate eines Gases zu steuern, das durch eine Katalysatorschicht strömt (eine Gesamtmenge des die Ameisensäure enthaltenden Gases und des Sauerstoff oder des den Sauerstoff enthaltenden Gases) sollen innerhalb von 0,2 l/min liegen, wenn ein Änderungsbetrag einer Katalysatortemperatur gemessen wird,
**dadurch gekennzeichnet, dass** der Ameisensäure-Zersetzungsteil ein Thermoelement aufweist, das ausgestaltet ist, um eine Katalysatortemperatur an mindestens einer Position an einem stromaufwärts angeordneten Teil zu messen,
wobei die Ameisensäure-Zersetzungsvorrichtung ferner einen Datenprozessor aufweist, der zum Eingeben der von dem Thermoelement gemessenen Temperatur ausgestaltet ist,
wobei der Datenprozessor auf eine solche Weise ausgestaltet ist, dass er den Änderungsbetrag der Katalysatortemperatur (ΔT) aus der von dem Thermoelement gemessenen Temperatur berechnet, wobei der Änderungsbetrag der Katalysatortemperatur (ΔT) durch eine Wärmeerzeugung während einer Zersetzungsreaktion der Ameisensäure erhöht wird, wenn das die Ameisensäure enthaltende Abgas und der Sauerstoff oder das den Sauerstoff enthaltende Gas in den Ameisensäure-Zersetzungsteil eingeführt werden, um die Aktivität des Katalysators zu bestimmen,
wobei der Datenprozessor ausgestaltet ist, um zu bestimmen, dass die Aktivität des Katalysators aufrechterhalten wird, wenn der Änderungsbetrag der Katalysatortemperatur (ΔT), der durch das Thermoelement gemessen wird, nicht kleiner als ein Einstellwert ist, und dass sich die Aktivität des Katalysators verschlechtert, wenn das von dem Thermoelement gemessene Ausmaß der Änderung der Katalysatortemperatur (ΔT) kleiner als der Einstellwert ist.

2. Vorrichtung nach Anspruch 1, wobei der Ameisensäure-Zersetzungsteil ein Thermoelement aufweist, das ausgestaltet ist, um eine Katalysatortemperatur an mindestens zwei Positionen an einem stromaufwärts angeordneten Teil und an einem stromabwärts angeordneten Teil zu messen,
wobei der Datenprozessor ausgestaltet ist, um jeden Änderungsbetrag der Katalysatortemperatur (ΔT1, ΔT2) aus der Temperatur zu berechnen, die von dem Thermoelement gemessen worden ist, wobei jeder Änderungsbetrag der Katalysatortemperatur (ΔT1, ΔT2) durch eine Wärmeerzeugung während einer Zersetzungsreaktion von Ameisensäure erhöht wird, wenn das die Ameisensäure enthaltende Abgas und der Sauerstoff oder das den Sauerstoff enthaltende Gas in den Ameisensäuregas-Zersetzungsteil eingeführt werden, um die Aktivität des Katalysators zu bestimmen,
wobei der Datenprozessor ausgestaltet ist, um den Änderungsbetrag der Katalysatortemperatur (ΔT1), der von dem Thermoelement an dem stromaufwärts angeordneten Teil gemessen worden ist, und den Änderungsbetrag der Katalysatortemperatur (ΔT1, ΔT2), der von dem Thermoelement an dem stromabwärts angeordneten Teil gemessen worden ist, zu vergleichen, und der Datenprozessor bestimmt, dass sich die Aktivität des Katalysators verschlechtert, wenn der Änderungsbetrag der Katalysatortemperatur (ΔT1) kleiner als ein Einstellwert ist.

3. Vorrichtung nach Anspruch 1, wobei der Ameisensäure-Zersetzungsteil eine Heizung zum Erhitzen des Katalysators aufweist.

4. Vorrichtung nach Anspruch 1, wobei ein Vorrichtungsalarm ausgelöst wird, wenn der Änderungsbetrag der Katalysatortemperatur (ΔT1) kleiner als der Einstellwert ist.

5. Vorrichtung nach Anspruch 2, wobei, wenn der Änderungsbetrag der Katalysatortemperatur (ΔT1) kleiner als der Einstellwert ist, ein Vorrichtungsalarm ausgelöst wird.

6. Verfahren zur Zersetzung von Ameisensäure, welches die Schritte umfasst:
ein Mischen eines Abgases, das die Ameisensäure enthält, das aus einer Lötvorrichtung abgegeben wird, in der ein Oberflächenoxidfilm mit der Ameisensäure reduziert wird, und eines Sauerstoffs oder eines Gases, das den Sauerstoff enthält, auf eine solche Weise, dass ein Molverhältnis der Ameisensäure und des Sauerstoffs (Sauerstoff / Ameisensäure) von 1,5 oder mehr vorliegt, und
ein Ermöglichen eines Reagierens des gemischten Gases mittels eines Durchleitens durch einen Zersetzungsteil, in dem ein Katalysator mit einem auf einem Träger getragenen Platingruppenmetall (mit Ausnahme eines Kohlenstoffmaterials) eingefüllt ist, um die Ameisensäure in Wasser und Kohlendioxid zu zersetzen,
**dadurch gekennzeichnet, dass** das Verfahren weiterhin die folgenden Schritte umfasst:
ein Einleiten des Gasgemisches in den Zersetzungsteil unter Bedingungen, bei denen eine Änderung der Strömungsrate des Gasgemisches innerhalb von 0,2 l/min liegt,
ein Messen eines Änderungsbetrags der Katalysatortemperatur (ΔT1) zumindest an einem stromaufwärts angeordneten Teil des Zersetzungsteils, wobei die Katalysatortemperatur (ΔT1) durch eine Wärmeerzeugung während der Zersetzungsreaktion der Ameisensäure in dem Gasgemisches erhöht wird, und
ein Bestimmen, dass die Aktivität des Katalysators aufrechterhalten wird, wenn der Änderungsbetrag der Katalysatortemperatur (ΔT1) nicht kleiner als ein Einstellwert ist, und
ein Bestimmen, dass sich die Aktivität des Katalysators verschlechtert, wenn der Änderungsbetrag der Katalysatortemperatur (ΔT1) kleiner als der Einstellwert ist.

7. Verfahren zur Zersetzung von Ameisensäure nach Anspruch 6, wobei eine Temperatur des Abgases nicht niedriger als 150 °C und nicht höher als ein Lotschmelzpunkt eines Lots ist, das in der Lötvorrichtung verwendet wird.

8. Verfahren zur Zersetzung von Ameisensäure nach Anspruch 6 oder 7, wobei eine Temperatur des Katalysators, bevor die Ameisensäure in dem Gasgemisch eine Zersetzungsreaktion beginnt, zwischen 50 °C und 100 °C liegt.

9. Verfahren zur Zersetzung von Ameisensäure nach einem der Ansprüche 6 bis 8, wobei das die Ameisensäure enthaltende Abgas ein Inertgas ist, das die Ameisensäure, das Kohlendioxid und das Wasser enthält.

10. Verfahren zur Zersetzung von Ameisensäure nach einem der Ansprüche 6 bis 9, wobei das Verfahren zur Zersetzung von Ameisensäure die Vorrichtung nach Anspruch 1 verwendet.

## Revendications

1. Appareil comprenant :
un appareil de soudage (10) configuré pour réduire un film d'oxyde de surface avec de l'acide formique,
un appareil de décomposition d'acide formique (1) configuré pour décomposer l'acide formique en eau et dioxyde de carbone, l'appareil de décomposition d'acide formique étant connecté à l'appareil de soudage, l'acide formique étant contenu dans un gaz d'échappement s'échappant de l'appareil de soudage, l'appareil de décomposition d'acide formique comprenant :
une pièce de décomposition d'acide formique (2) dans laquelle un catalyseur ayant un métal du groupe platine porté sur un porteur (excluant un matériau de carbone) est rempli :
un tuyau d'introduction de gaz (3) configuré pour introduire le gaz d'échappement contenant l'acide formique depuis l'appareil de soudage dans la pièce de décomposition d'acide formique ;
une unité d'introduction de gaz (4) configurée pour introduire de l'oxygène ou un gaz contenant de l'oxygène dans la pièce de décomposition d'acide formique ; et
une pompe à vide (11) configurée pour introduire le gaz d'échappement dans la pièce de décomposition d'acide formique, dans laquelle la pompe à vide (11) est configurée pour contrôler un changement de débit de gaz passant au travers d'une couche de catalyseur (une quantité totale du gaz contenant l'acide formique et l'oxygène ou le gaz contenant de l'oxygène) étant de 0,2 l/min lorsqu'une amplitude de changement d'une température de catalyseur est mesurée,
**caractérisé en ce que** la pièce de décomposition d'acide formique a un thermocouple configuré pour mesurer une température de catalyseur au moins en une position sur une partie amont,
l'appareil de décomposition d'acide formique comprenant en outre un processeur de données configuré pour capter la température mesurée par le thermocouple ;
dans lequel le processeur de données est configuré pour calculer une amplitude de changement de la température du catalyseur (ΔT) par rapport à la température mesurée par le thermocouple, l'amplitude de changement de la température du catalyseur (ΔT) étant augmentée par la génération de chaleur pendant une réaction de décomposition de l'acide formique lorsque le gaz d'échappement contenant l'acide formique et l'oxygène ou le gaz contenant l'oxygène sont introduits dans la pièce de décomposition d'acide formique pour déterminer l'activité du catalyseur,
dans lequel le processeur de données est configuré pour déterminer que l'activité du catalyseur est maintenue lorsque l'amplitude du changement de la température du catalyseur (ΔT) mesurée par le thermocouple n'est pas inférieure à une valeur de consigne, et que l'activité du catalyseur est détériorée lorsque l'amplitude du changement de la température du catalyseur (ΔT) mesurée par le thermocouple est inférieure à la valeur de consigne.

2. Appareil selon la revendication 1, dans lequel la pièce de décomposition d'acide formique a un thermocouple configuré pour mesurer une température de catalyseur au moins en deux positions sur une partie amont et une partie aval,
dans lequel le processeur de données est configuré pour calculer chaque amplitude de changement de la température du catalyseur (ΔT1, ΔT2), par rapport à la température mesurée par le thermocouple, chaque amplitude de changement de la température du catalyseur (ΔT1, ΔT2) étant augmentée par la génération de chaleur pendant une réaction de décomposition de l'acide formique lorsque le gaz d'échappement contenant l'acide formique et l'oxygène ou le gaz contenant l'oxygène sont introduits dans la pièce de décomposition d'acide formique pour déterminer l'activité du catalyseur,
dans lequel le processeur de données est configuré pour comparer l'amplitude de changement de la température du catalyseur (ΔT1) mesurée par le thermocouple sur la partie amont et l'amplitude de changement de la température du catalyseur (ΔT2) mesurée par le thermocouple sur la partie aval, et le processeur de données détermine que l'activité du catalyseur est détériorée lorsque ΔT1 est inférieure à une valeur de consigne.

3. Appareil selon la revendication 1, dans lequel la partie de décomposition d'acide formique a un élément chauffant pour chauffer le catalyseur.

4. Appareil selon la revendication 1, dans lequel lorsque l'amplitude de changement de la température du catalyseur (ΔT) est inférieure à la valeur de consigne, une alarme d'appareil est déclenchée.

5. Appareil selon la revendication 2, dans lequel lorsque l'amplitude de changement de la température du catalyseur (ΔT1) est inférieure à la valeur de consigne, une alarme de l'appareil est activée.

6. Procédé de décomposition de l'acide formique, comprenant les étapes consistant à :
mélanger un gaz d'échappement contenant de l'acide formique rejeté par un appareil de soudage dans lequel un film d'oxyde de surface est réduit avec l'acide formique, et de l'oxygène ou un gaz contenant de l'oxygène de façon qu'un ratio molaire de l'acide formique et de l'oxygène (oxygène/acide formique) soit de 1,5 ou plus, et
permettre au gaz mélangé d'être mis en réaction par le passage dans une pièce de décomposition dans laquelle un catalyseur ayant un métal du groupe platine porté par un porteur (exclusion faite d'un matériau de carbone) est rempli pour décomposer l'acide formique en eau et dioxyde de carbone, **caractérisé en ce que** le procédé comprend en outre les étapes consistant à :
introduire le gaz mélangé dans la partie de décomposition à la condition qu'un changement du débit du gaz mélangé soit de moins de 0,2l/min ;
mesurer une amplitude de changement de la température du catalyseur (ΔT) en au moins une partie amont dans la partie de décomposition, la température du catalyseur (ΔT) étant augmentée par la génération de chaleur pendant une réaction de décomposition de l'acide formique dans le gaz mélangé ; et
déterminer que l'activité du catalyseur est maintenue lorsque l'amplitude de changement de la température du catalyseur (ΔT) n'est pas inférieure à une valeur de consigne, et déterminer que l'activité du catalyseur est détériorée lorsque l'amplitude de changement de la température du catalyseur (ΔT) est inférieure à la valeur de consigne.

7. Procédé de décomposition de l'acide formique selon la revendication 6, dans lequel une température du gaz d'évacuation n'est pas inférieure à 150°C et pas supérieure à un point de fusion de la soudure utilisée dans l'appareil de soudage.

8. Procédé de décomposition de l'acide formique selon la revendication 6 ou 7, dans lequel une température du catalyseur avant que l'acide formique dans le gaz mélangé ne commence sa réaction de décomposition est entre 50°C et 100°C.

9. Procédé de décomposition de l'acide formique selon l'une quelconque des revendications 6 à 8, dans lequel le gaz d'échappement contenant l'acide formique est un gaz inerte contenant l'acide formique, du dioxyde de carbone et de l'eau.

10. Procédé de décomposition de l'acide formique selon l'une quelconque des revendications 6 à 9, dans lequel le procédé de décomposition de l'acide formique utilise l'appareil selon la revendication 1.
